# EUROPEAN PATENT APPLICATION

(11) **EP 1 780 655 A1**
(43) Date of publication of application: **02.05.2007**
(21) Application number: 06013964.9
(22) Date of filing: 05.07.2006
(51) Int. Cl.: G06K 7/00

(54) **RFID tag, RFID reader/writer, RFID system, and communication method**

(30) Priority: 18.10.2005 JP 2005302491
(71) Applicant: HITACHI, LTD., Chiyoda-ku Tokyo 100-8280 (JP)
(72) Inventor: Yamazoe, Takanori, Hitachi, Ltd., Int. Prop. Off., Chiyoda-ku Tokyo 100-8220 (JP); Fukushima, S., Hitachi, Ltd., Int. Prop. Off., Chiyoda-ku Tokyo 100-8220 (JP); Kuwana, Toshiyuchi, Hitachi, Ltd., Int. Prop. Off, Chiyoda-ku Tokyo 100-8220 (JP)
(74) Representative: Strehl Schübel-Hopf & Partner

(57) **Abstract**

A multiprotocol RFID reader/writer (R/W) transmits a query command ALL (A), which causes all RFID tags (A) with a communication method (A) in the communication range to respond simultaneously. If the reader/writer (R/W) receives responses, it can recognize presence of the RFID tags with a communication method (A) from its reception level or the like. Next, the reader/writer transmits a query command ALL (B) which causes all RFID tags (B) with a communication method (B) in the communication range to respond simultaneously. If the reader/writer receives no response, it can recognize that no RFID tag with the communication method (B) is present and therefore can rapidly switch to the next communication method. In an RFID system, therefore, a communication time between RFID tags and an RFID reader/writer can be reduced.

## Description

### TECHNICAL FIELD OF THE INVENTION

The present invention relates to an RFID system including a reader/writer and RFID tags. More particularly, it relates to a technology effectively applied to an RFID system including plural types of RFID tags having different communication methods.

### BACKGROUND OF THE INVENTION

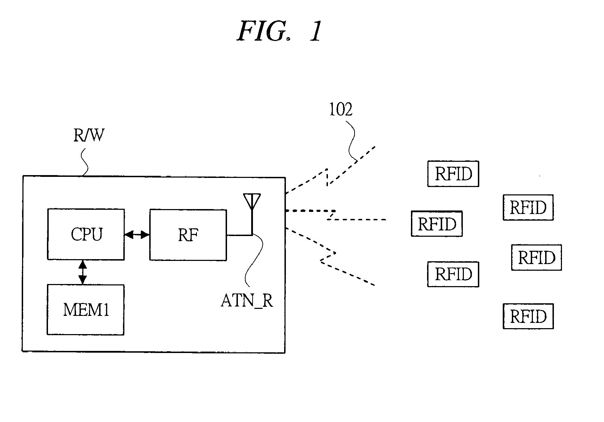

As shown in FIG. 1, an RFID (radio frequency identification) system includes a terminal called reader/writer R/W and a plurality of RFID tags (RFIDs) in general. The R/W includes, for example, a communication circuit RF connected to an antenna ATN_R, a memory circuit MEM1, a control circuit CPU for controlling these circuits, and others, and it performs reading/writing of data stored in the RFID through radio communication. Specifically, the R/W transmits waves (non-modulated waves or modulated waves) 102 to the RFID, and the RFID receives and demodulates the waves emitted from the R/W. Then, the RFID transmits the stored data thereof according to need, and the R/W receives and demodulates the data.

Currently, a plurality of methods have been proposed as a radio communication method between the R/W and the RFID, and RFID systems corresponding to the plurality of methods are present. For example, in ISO (International Organization for Standard) and IEC (International Electrotechnical Commission), two kinds of ISO/IEC 18000-6 Type A and Type B are standardized as a protocol standard in an air interface of UHF band (860 MHz to 960 MHz). On the other hand, a unique standardization for UHF band has been provided in EPC Global (a nonprofit organization for electronic tag standardization jointly established by International EAN (European Article Numbering) Association which is an international barcode standardizing group) and US UCC (Uniform Code Council).

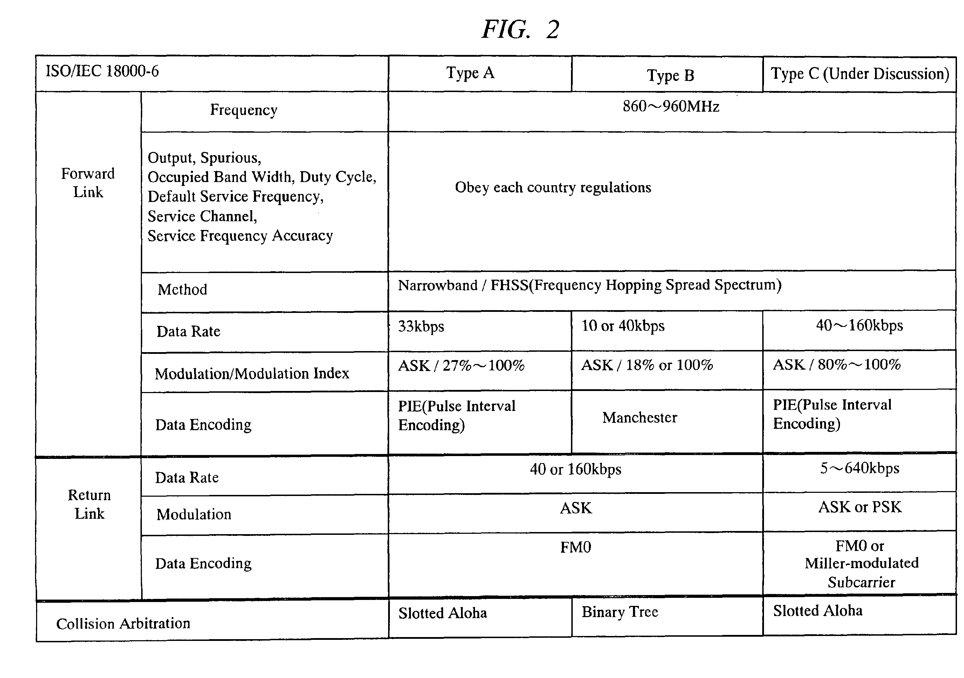

FIG. 2 shows a list of protocols for UHF band internationally standardized in ISO/IEC. As described above, two kinds of ISO/IEC 18000-6 Type A and Type B have been already standardized in ISO/IEC, and Type C is proposed from EPC Global to ISO/IEC and is now under discussion (ISO/IEC 18000-6 Type A, Type B, and Type C are hereinafter referred to as Type A, Type B, and Type C). As understood from FIG. 2, as a transmission interface from the reader/writer R/W to the RFID tags (RFIDs), data rates in Type A, Type B, and Type C are respectively 33 kbps, 10 or 40 kbps, and 40 to 160 kbps, which are not unified. Also, regarding data encoding, PIE (Pulse Interval Encoding) is used in Type A and Type C and Manchester code is used in Type B, and it is understood that the data encoding is not unified, either.

### SUMMARY OF THE INVENTION

As described above, when a plurality of radio communication methods are present in a mixed manner, since the communication method of RFID attached to an article is unknown, the R/W is required to have a plurality of communication methods to perform communication with the RFID while switching the methods from one method to another method in order. When communication with the RFID is performed while sequentially switching the methods, communication time is prolonged plural times. As a result, such an R/W cannot be used in the application that RFID is moved at high speed by a belt conveyor, a truck, or the like.

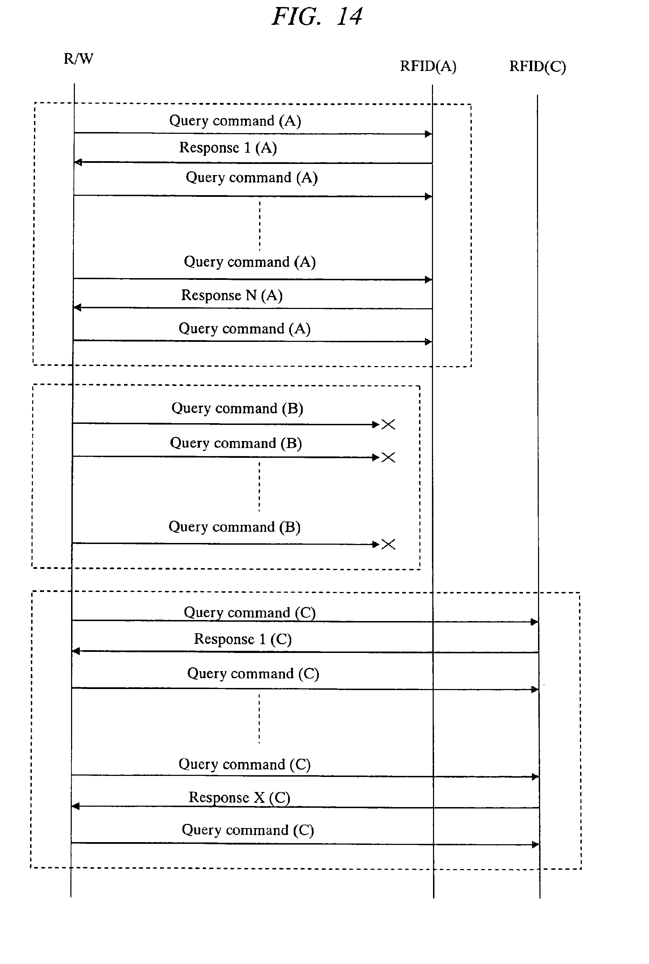

An example of the case will be described with reference to FIG. 14. Since the R/W does not have knowledge about the communication methods of the RFID, it first reads RFID (A) with communication method (A). Since the R/W is generally assumed in advance to read about N RFIDs, it feeds query commands in accordance therewith. A query command 1 (A) (not shown) fed first is set with the number of query commands fed thereafter. Upon receipt of the query command 1 (A), the RFID (A) determines at random any of the query command 1 (A) and a plurality of query commands (A) fed subsequent thereto to which it responds. The R/W generally can receive only one RFID (A) in response to the query command 1 (A) or the query command (A). In the case shown in FIG. 14, since the RFID (A) is present, N RFIDs (A) respond to the query commands (A) fed from the R/W, respectively.

Next, the R/W feeds a query command 1 (B) (not shown) and query commands (B) in order to confirm the presence of RFID (B). Since no RFID (B) is present, a response from the RFID (B) is not issued, but the R/W continues to feed the query command (B) several times. However, since there is no response from the RFID (B), it is confirmed that no RFID (B) is present based on the number of issued query commands (B) or a time period of the issued query commands (B). Next, the R/W feeds a query command 1 (C) (not shown) and query commands (C) to read RFID (C). X RFIDs (C) respond to the query commands (C), respectively.

As described above, though the RFID (B) is not present, a reading time of the RFID (B) occurs, which results in extension of a total communication time. Therefore, an object of the present invention is to achieve the reduction of communication time especially in the communication with RFID tags having plural communication methods. The above and other objects and novel characteristics of the present invention will be apparent from the description of this specification and the accompanying drawings.

The typical ones of the inventions disclosed in this application will be briefly described as follows.

The RFID system according to the present invention comprises: singular or plural first RFID tags corresponding to a first communication method; singular or plural second RFID tags corresponding to a second communication method; and an RFID reader/writer which can perform radio communication with the singular or plural first RFID tags and the singular or plural second RFID tags. Also, the RFID system is provided with a function to cause the plural first RFID tags to respond to the RFID reader/writer at a time and cause the plural second RFID tags to respond to the RFID reader/writer at a time.

In such a configuration, for example, the following processing sequence can be realized. That is, before reading or writing individual RFID tags, the reader/writer transmits a first command to which a plurality of first RFID tags having a first communication method simultaneously respond, with using the first communication method of a plurality of communication methods. Then, the reader/writer confirms whether or not any RFID tag having the first communication method is present based upon whether or not a response from the first RFID tag is issued. When receiving the response, the reader/writer reads or writes each RFID tag while performing congestion control with the first communication method. If the reader/writer does not receive any response, it confirms whether or not any RFID tag having a second communication method different from the first communication method is present by transmitting a second command to which a plurality of second RFID tags having the second communication method simultaneously respond.

For example, it is also possible to realize the following processing sequence. That is, before reading or writing individual RFID tags, the reader/writer transmits a third command common to a plurality of RFID tags having different communication methods. At this time, a timing (slot or time) of responding to the third command is uniquely defined to each RFID tag in advance based upon its own communication method. By this means, for example, the reader/writer can receive responses from the first RFID tags with the first communication method at a time and just thereafter it can receive responses from the second RFID tags with the second communication method at a time. By detecting the responses and reception levels thereof, the reader/writer confirms the presence of the first RFID tags with the first communication method and the second RFID tags with the second communication method.

By using such processing sequences as described above, even when RFID tag with a certain communication method is not present, such absence can be rapidly confirmed. Therefore, the reduction in communication time can be achieved in comparison to that in the prior art.

The effects obtained by typical aspects of the present invention will be briefly described below. That is, it is possible to achieve the reduction in communication time.

### BRIEF DESCRIPTIONS OF THE DRAWINGS

FIG. 1 is a schematic diagram showing a configuration example of an RFID system;
FIG. 2 is an explanatory diagram showing a UHF band passive RFID system specifications defined in ISO/IEC;
FIG. 3 is a sequence diagram showing one example of a process between a reader/writer and RFID tags in an RFID system according to a first embodiment of the present invention;
FIG. 4 is a flowchart showing one example of a control method of the reader/writer in the RFID system according to the first embodiment of the present invention;
FIG. 5 is a flowchart showing one example of a control method of the reader/writer subsequent to FIG. 4;
FIG. 6 is an explanatory diagram showing examples of command formats directed from the reader/writer to RFID tags in the RFID system according to the first embodiment of the present invention;
FIG. 7A is a timing chart to a query command 1 showing one example of a process when communication is performed between the reader/writer and RFID tags by using the command format shown in FIG. 6;
FIG. 7B is a timing chart to a query command ALL showing one example of a process when communication is performed between the reader/writer and RFID tags by using the command format shown in FIG. 6;
FIG. 8 is a block diagram showing one example of a configuration of the RFID tag in the RFID system according to the first embodiment of the present invention;
FIG. 9 is a flowchart showing one example of a control method of the RFID tag in the RFID system according to the first embodiment of the present invention;
FIG. 10 is a flowchart showing another example of the control method of the RFID tags in the RFID system according to the first embodiment of the present invention;
FIG. 11 is a sequence diagram showing one example of a process between a reader/writer and RFID tags in an RFID system according to a second embodiment of the present invention;
FIG. 12 is a sequence diagram showing one example of a process between a reader/writer and RFID tags in an RFID system according to a third embodiment of the present invention;
FIG. 13 is a timing chart showing one example of a response action of the RFID tag in the sequence shown in FIG. 12; and
FIG. 14 is a sequence diagram showing one example of a process between a reader/writer and RFID tags in an RFID system examined prior to the present invention.

### DESCRIPTIONS OF THE PREFERRED EMBODIMENTS

Hereinafter, embodiments of the present invention will be described in detail with reference to the accompanying drawings. Note that components having the same function are denoted by the same reference symbols throughout the drawings for describing the embodiment, and the repetitive description thereof will be omitted.

### (First Embodiment)

In an RFID system performing data communication within a range of about several meters, when a reader/writer R/W reads a plurality of RFID tags (RFIDs), it reads RFIDs with using a congestion control such as slotted Aloha or Binary Tree in order to arbitrate response collision from RFIDs. The feature of this embodiment lies in that, by causing plural RFIDs to respond simultaneously while performing the congestion control according to its communication method, the response collision is detected and the presence of RFIDs having a communication method is confirmed, and then, the communication with respective RFIDs is performed.

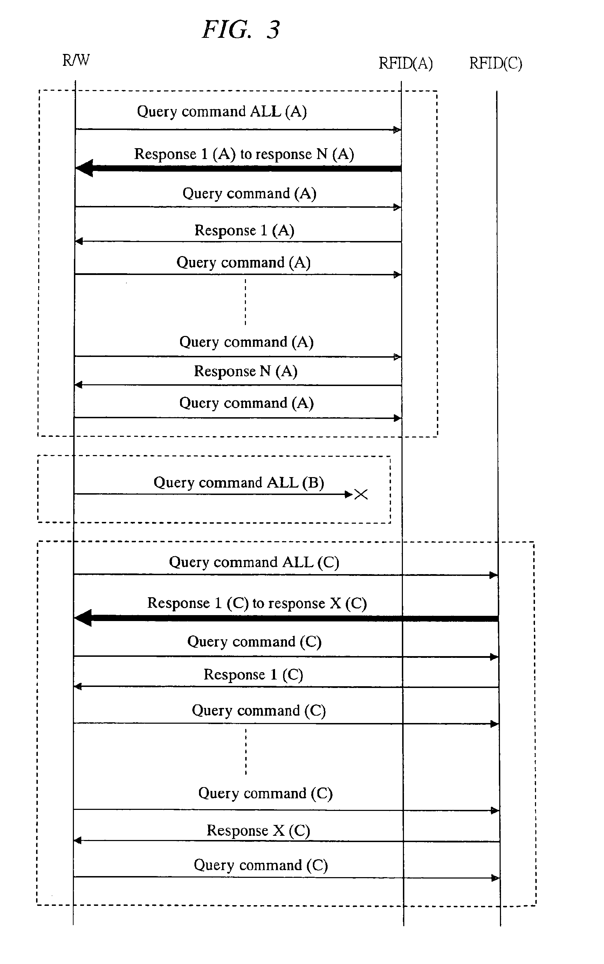

With reference to FIG. 3, the R/W feeds a query command ALL (A) which can be received and interpreted by RFID (A) having a congestion control method (A) of a specific communication method to plural RFIDs. The query command ALL (A) is set so that RFIDs (A) having the congestion control method (A) can respond simultaneously at the same timing. When there is at least one RFID (A) which can receive and interpret the query command ALL (A), it responds immediately. In FIG. 3, it is assumed that there are N RFIDs (A), and response 1 (A) to response N (A) are returned back to the R/W.

Since N RFIDs (A) simultaneously respond at the same timing, there is a possibility that the R/W cannot receive the responses normally due to collision of the responses of RFIDs (A). However, since a reception level is equal to or higher than a level at which the RFID (A) responds, the R/W can confirm the responses from some of the RFIDs (A). Further, since a response level of an RFID (A) just proximal to the R/W is high, the R/W can normally receive a response from the RFID (A) in some cases. When the R/W detects reception level equal to or higher than response level or receives a response normally from the query command ALL (A), it recognizes that at least one RFID (A) is present and then starts a process for receiving RFIDs (A) one by one. That is, the R/W feeds a query command 1 (A) (not shown) and query commands (A) and receives responses from RFIDs (A) which respond to the query command 1 (A) and the query commands (A) one by one, thereby recognizing the N RFIDs (A).

Next, the R/W feeds a query command ALL (B) which can be received and interpreted by RFID (B) having a congestion control method (B) of a communication method different from that of RFID (A). The query command ALL (B) is also set so that respective RFIDs (B) having the congestion control method (B) can simultaneously respond at the same timing. In FIG. 3, it is assumed that no RFID (B) is present, and a response from RFID (B) does not occur. Therefore, the R/W can immediately recognize that no RFID (B) is present.

Next, the R/W feeds a query command ALL (C) which can be received and interpreted by RFID (C) having a congestion control method (C) of a communication method different from those of the RFID (A) and the RFID (B). The query command ALL (C) is also set so that respective RFIDs (C) having the congestion control method (C) can simultaneously respond at the same timing. When at least one RFID (C) which can receive and interpret the query command ALL (C) is present, it responds immediately. When the R/W detects reception level equal to or higher than response level or receives a response normally from the query command ALL (C), it recognizes that at least one RFID (C) is present and then starts a process for receiving RFIDs (C) one by one. That is, the R/W feeds a query command 1 (C) (not shown) and query commands (C) and receives responses from RFIDs (C) which respond to the query command 1 (C) and the query commands (C) one by one, thereby recognizing the X RFIDs (C).

More specifically, the communication method as described above can be realized by utilizing control method of R/W and RFID as described below.

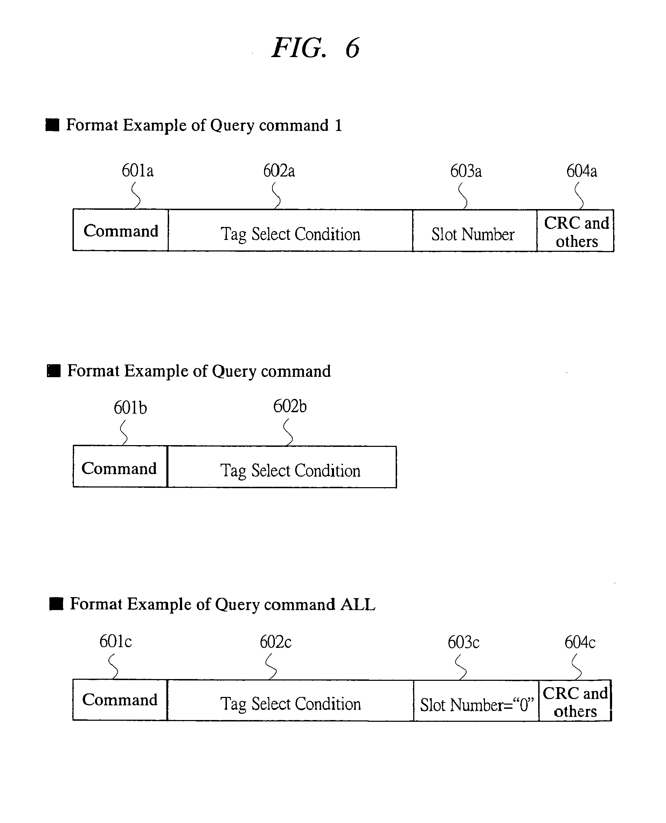

FIG. 6 is an explanatory diagram showing examples of command formats directed from the R/W to the RFIDs. In FIG. 6, examples of command formats of the query command 1, query command, and query command ALL described above are shown. The query command 1 includes, for example, a command setting portion 601a, a tag select condition setting portion 602a, a slot number setting portion 603a, an error check portion 604a, and others. The query command includes, for example, a command setting portion 601b, a tag select condition setting portion 602b, and others. The query command ALL includes, for example, a command setting portion 601c, a tag select condition setting portion 602c, a slot number setting portion 603c, an error check portion 604c, and others similar to the query command 1.

The command setting portions 601a to 601c are bit strings showing query contents, and the bit strings differ in accordance with the query contents. For example, a query command issued for the recognition of RFID tags is "0001" and a memory read command of the RFID tags is "100". The tag select condition setting portions 602a to 602c indicate a kind of an RFID tag responding to the query content, a state of an RFID tag, a response condition of the RFID tag, and others. When the condition is not satisfied, the RFID tag does not respond. The kind of an RFID tag means, for example, an RFID tag having a certain ID or the like, the state of an RFID tag means whether or not a tag ID has been read by the R/W, or the like, and the response condition of an RFID tag means data rate or data encoding of an RFID tag or the like.

The slot number setting portions 603a and 603c show a slot number to which an RFID tag responds. The RFID tag responds between the designated slot numbers. When a plurality of tags are present, the slot number is ordinarily set with a plurality of values. In this case, a query command ALL having a function as shown in FIG. 3 can be realized by setting the slot number at the slot number setting portion 603c to '0'. The error check portions 604a and 604c are bit strings for detecting data error of the query command or the like, and it may be CRC (Cyclic Redundancy Check) code or the like, for example.

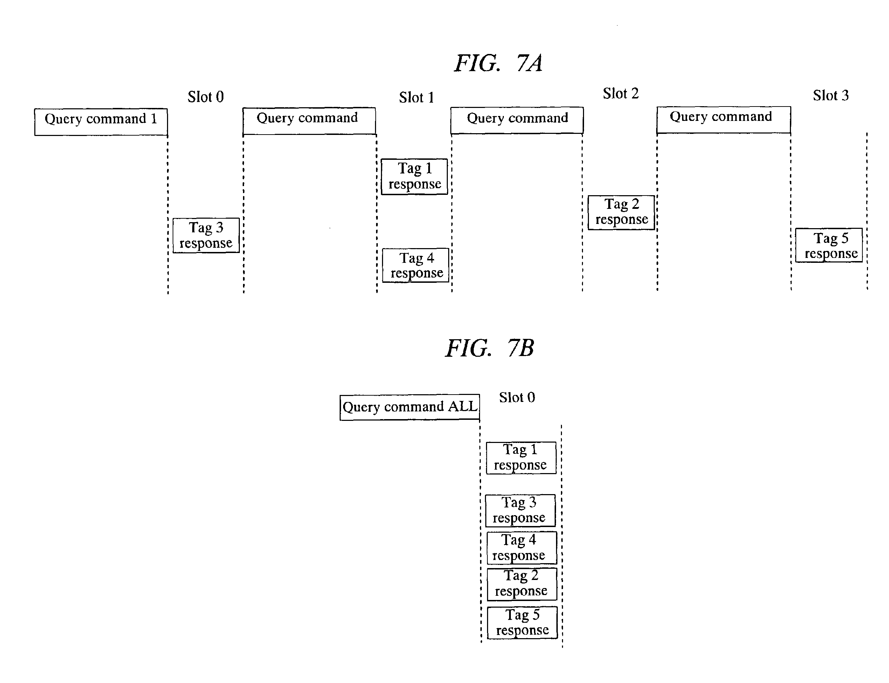

When data communication is performed between the R/W and the RFID tags with using such command formats, the timing charts as shown in FIG. 7A and 7B can be obtained, for example. FIG. 7A corresponds to a conventional processing sequence as described in FIG. 14 where it is confirmed that an RFID tag of a certain communication method is present by recognizing individual RFID tags. Here, it is assumed that five RFID tags are present and the slot number is set to '3' by the above-described query command 1.

In a recognition method of an RFID tag shown in FIG. 7A, for example, respective RFID tags generate random numbers corresponding to the slot numbers in response to the query command 1 generated from the R/W, and an RFID tag where the value of the generated random number is '0' (slot 0) returns its response to the R/W. Further, after the query command 1, the R/W sequentially generates a number of query commands as many as the slot number, and each RFID tag subtracts 1 from the value (slot) of its own random number described above for each reception of the query commands. In FIG. 7A, for example, only an RFID tag 3 generates a random number '0' (slot 0) in response to the query command 1 and only the RFID tag 3 returns a response to the R/W. Regarding a query command subsequent to the query command 1, RFID tags 1 and 4 which have generated the random number `1' (slot 1) in response to the first query command 1 return responses to the R/W, respectively, because their slots are subjected to subtraction by the query command and become the slot 0.

On the other hand, FIG. 7B shows a query command ALL of the present embodiment. In this case, since the slot number is defined as '0' as described above, all the RFID tags 1 to 5 generate the same slot (slot 0). Accordingly, the plurality of RFID tags which have received the query command ALL respond at a similar timing just after the reception of the query command ALL. Note that a method for realizing the query command ALL is not limited to this method, of course. For example, such a specification is also preferable, in which a new command is provided and a plurality of RFID tags which have received the command respond at a fixed timing uniquely defined based upon their own communication methods.

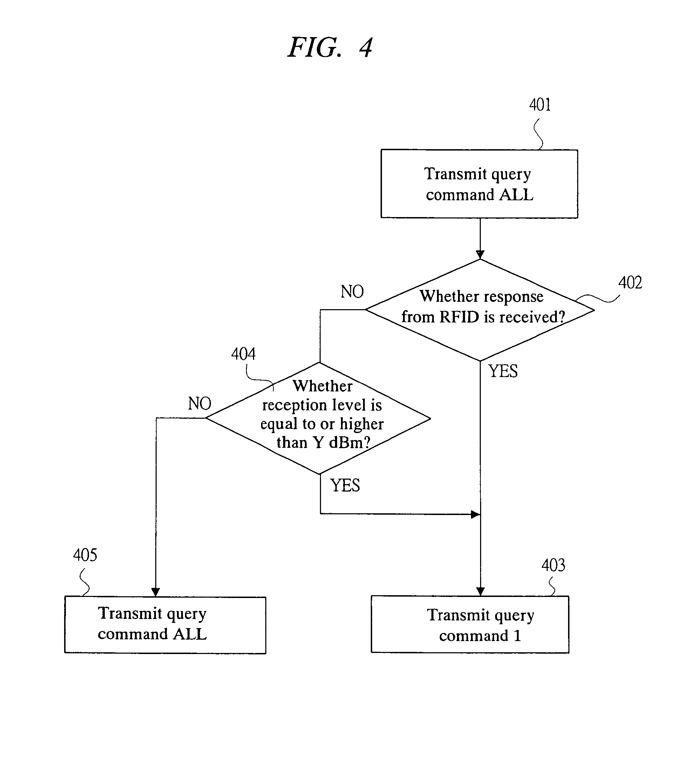

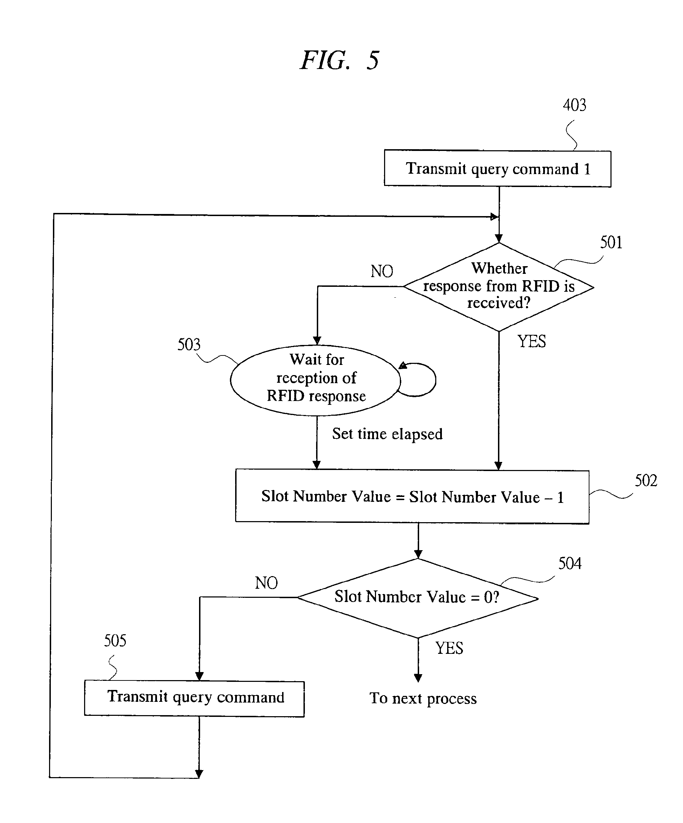

FIG. 4 and FIG. 5 are flowcharts showing an example of an R/W control method. After the R/W feeds a query command ALL (the query command ALL (A) in the example shown in FIG. 3) at step 401, it receives responses from respective RFIDs at step 402. When the R/W receives the responses from the RFIDs, it feeds a query command 1 (the query command 1 (A) in the example shown in FIG. 3) at step 403 and it sequentially reads respective RFIDs by feeding the query commands.

On the other hand, when the R/W cannot receive any response of RFID at step 402, it determines whether or not a reception level acquired at a time of RFID reception at step 402 is equal to or higher than YdBm which is equal to an RFID reception response level at step 404. If the reception level is equal to or higher than YdBm, the control proceeds to a process for transmission of the query command 1 at step 403. If the reception level is lower than YdBm, the R/W determines that a response has not been generated from RFID and feeds a query command ALL (the query command ALL (B) in the example shown in FIG. 3) corresponding to the next communication method at step 405. In this manner, the R/W can instantaneously find RFIDs having different communication methods, and it becomes possible to reduce a time period for recognizing plural RFIDs.

After the R/W transmits the query command 1 at step 403 shown in FIG. 4, it performs a process such as shown in FIG. 5 in order to recognize individual RFID tags (individual RFIDs (A) in the example shown in FIG. 3). Note that the process is performed along the timing chart as shown in FIG. 7A. In FIG. 5, after the R/W sets a desired slot number based upon FIG. 6 to transmit the query command 1 at step 403, it confirms presence/absence of a response from RFID at step 501. When the R/W receives a response, it subtracts 1 from the set slot number in the query command 1 at step 502. When the R/W does not receive a response, after it waits for a response for a fixed time period at step 503, the control proceeds to step 502 due to elapse of the fixed time period.

After the R/W subtracts 1 from the slot number at step 502, it determines whether or not the value of the slot number is '0' at step 504. When the value is '0', the control proceeds to a desired next process. On the other hand, when the value is not '0', the R/W transmits a query command at step 505, and the control returns back to step 501. More specifically, the R/W issues query commands as many times as the number corresponding to the slot number.

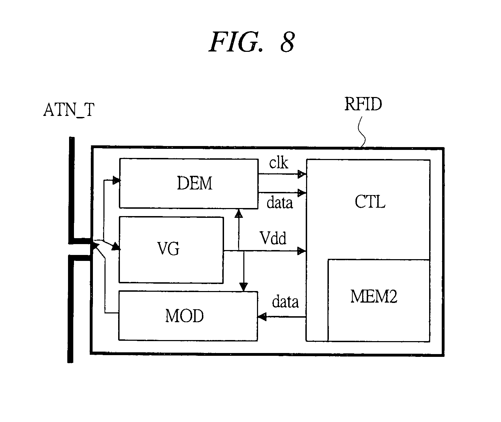

FIG. 8 is a block diagram showing a configuration example of an RFID tag. The RFID tag (RFID) shown in FIG. 8 includes, for example, an antenna ATN_T, a demodulating circuit DEM, a power supply generating circuit VG, a modulating circuit MOD, a control circuit CTL, a memory circuit MEM2, and others. The demodulating circuit DEM demodulates a signal received from the antenna ATN_T to output a clock signal clk and a data signal data to the control circuit CTL. The power supply generating circuit VG generates a power supply voltage Vdd from a carrier signal received from the antenna ATN_T via rectification or the like to supply the same to respective circuits. The modulating circuit MOD modulates the data signal data outputted from the control circuit CTL to transmit the same to the R/W via the antenna ATN_T. The control circuit CTL performs various base band processes such as interpretation of a command signal obtained via the demodulating circuit DEM, control on reading/writing from/to the memory circuit MEM2, a process for transmitting data read from the memory circuit MEM2 to the modulating circuit MOD, and others.

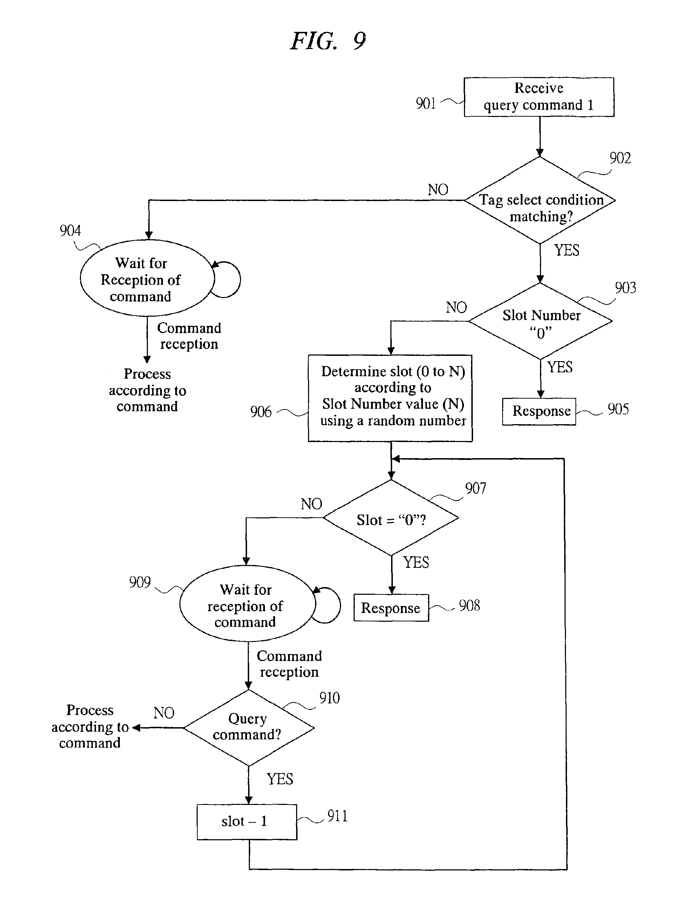

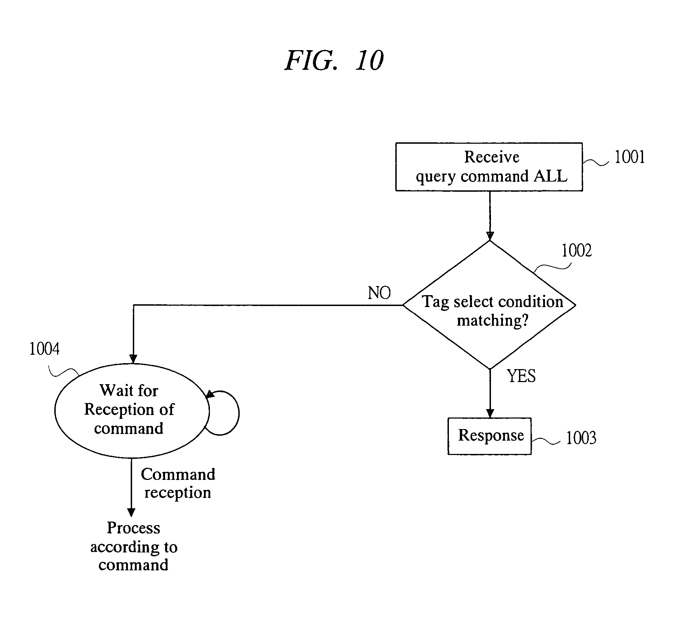

FIG. 9 and FIG. 10 are flowcharts showing an example of a control method of RFID tag. The RFID performs a process as shown in FIG. 9 and FIG. 10 in response to the process of the R/W described in FIG. 4 and FIG. 5. In FIG. 9, when the RFID receives a query command 1 from the R/W (step 901), it determines matching/mismatching of the tag select condition in the query command 1 (step 902). When the RFID determines matching of the tag select condition, it determines whether or not the slot number in the query command 1 is '0' at step 903. When the RFID determines mismatching of the tag select condition, the RFID is put in a waiting state for command reception at step 904.

When the slot number is '0' at step 903, the RFID returns a response to the R/W (step 905). When the slot number is not '0' at step 903, the RFID generates random numbers (slot) from 0 to N corresponding to the value (N) of the slot number at step 906. When the value of the generated slot number is '0' (step 907), the RFID returns a response at step 908. On the other hand, when the value of the slot number is not '0', the RFID is put in a waiting state for command reception (step 909). Then, when the RFID receives a command in this state (step 910), it determines whether or not the received command is a query command (step 910). When the command is a query command, the RFID subtracts 1 from the value of the slot number at step 911, and the control returns back to step 907. When the command is not a query command, the RFID performs a process according to the received command.

In FIG. 10, when the RFID receives a query command ALL from the R/W (step 1001), it determines matching/mismatching of a tag select condition in the query command ALL (step 1002). When the RFID determines the matching of the tag select condition, it returns a response to the R/W (step 1003). Also, when the RFID determines the mismatching of the tag select condition, it is put in a waiting state for command reception (step 1004). As described above, the RFID receives the query command ALL and it immediately returns a response when the matching of the tag select condition (for example, the communication method) is obtained. Accordingly, when plural RFIDs with the same communication method are present, responses are simultaneously issued at a similar timing as shown in FIG. 7B.

As described above, by using the RFID system according to the first embodiment, even when plural RFIDs with different communication methods are present in a mixed manner, it is possible to achieve the reduction in reading time as shown in FIG. 3. Accordingly, communication time can be shortened.

### (Second Embodiment)

The feature of the second embodiment lies in that singular or plural communication methods included in a plurality of RFID tags are recognized in an early stage of communication, which is different from the above-described embodiment shown in FIG. 3.

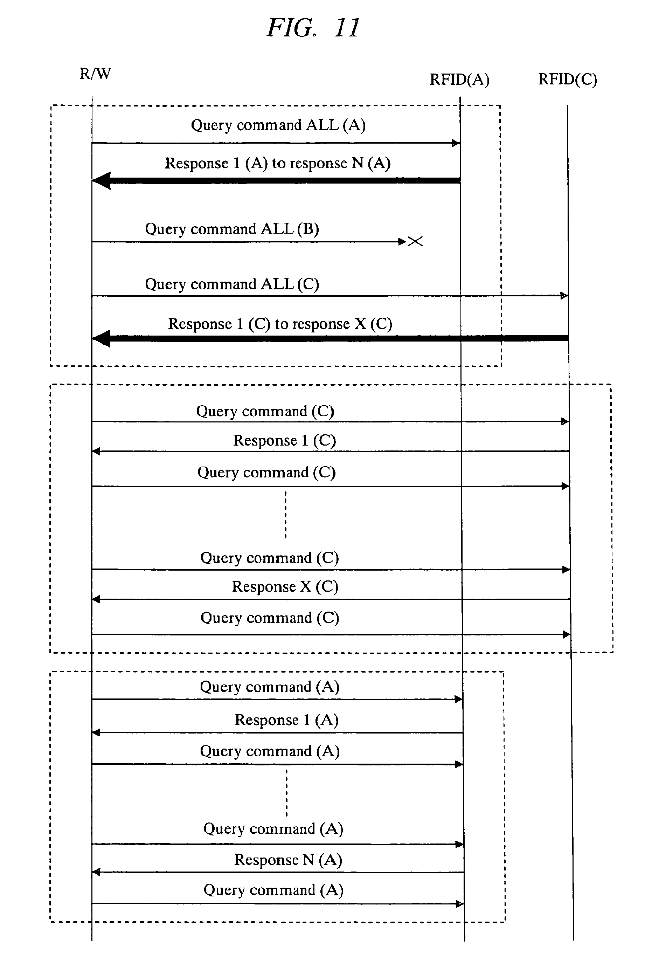

With reference to FIG. 11, when the R/W transmits a query command ALL (A) in order to confirm the types of communication methods owned by respective RFIDs, responses from N RFIDs (A) are received by the R/W. Therefore, the R/W recognizes that at least one RFID (A) is present. Next, when the R/W transmits a query command ALL (B), it receives no response. Therefore, it recognizes that no RFID (B) is present. Further, when the R/W transmits a query command ALL (C), it receives responses from X RFIDs (C). Therefore, it recognizes that at least one RFID (C) is present.

As a result, the R/W can confirm that at least one RFID (A) and at least one RFID (C) are present. In this event, the R/W can make such selection that only one of the RFIDs (A) and the RFIDs (C) are received or the RFIDs (C) are individually received on ahead according to requirement from an application. FIG. 11 shows an example where the RFIDs (C) are received ahead of RFIDs (A).

By detecting the types of a communication method present in RFIDs in advance in this manner, a reading method corresponding to each application can be realized in addition to the advantage of the first embodiment. Accordingly, it becomes possible to reduce a communication time and to improve flexibility of communication process.

### (Third Embodiment)

In the first and second embodiments described above, respective communication methods are sequentially recognized by causing a plurality of RFID tags provided with the same communication method to simultaneously respond by one command. However, the feature of the third embodiment lies in that respective communication methods are collectively recognized by causing a plurality of RFID tags provided with different communication methods to respond by one command.

Since some different communication methods have a portion common to each other, a command from the R/W can be recognized by plural RFIDs with different communication methods in some cases. In this case, by transmitting a query command ALL which can be recognized by plural RFIDs with different communication methods from the R/W, plural RFIDs simultaneously respond and the R/W can recognize the types of communication methods possessed by the RFIDs at a time.

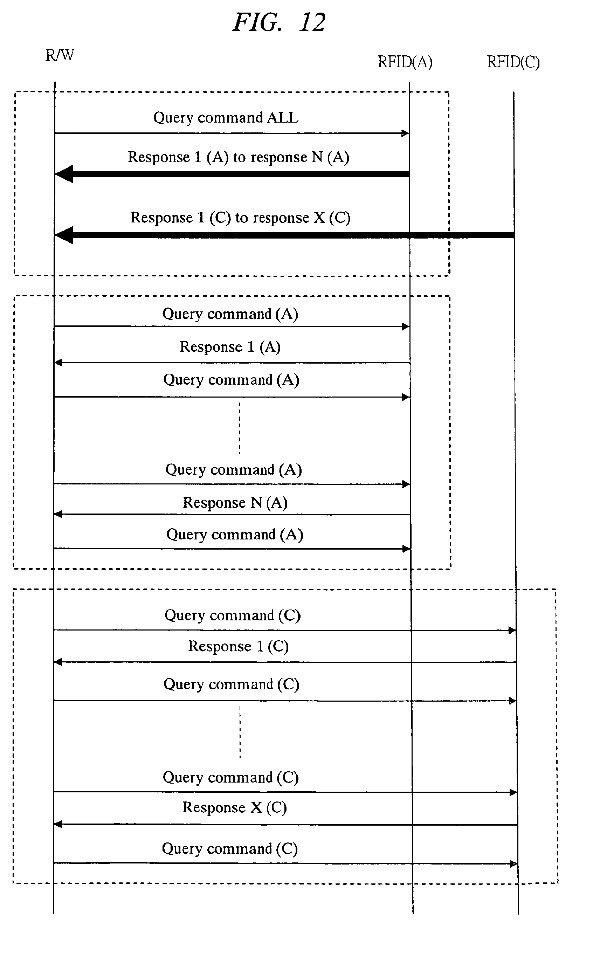

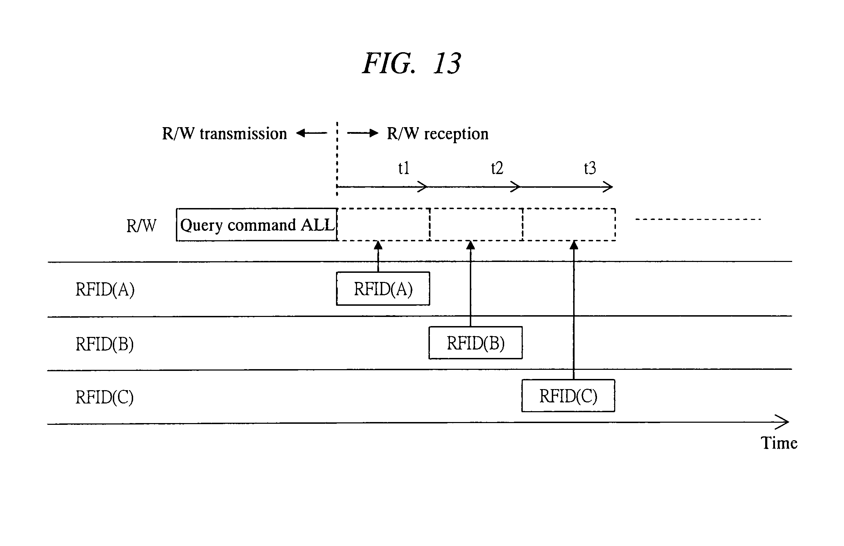

The description will be made with reference to FIG. 12 and FIG. 13. In FIG. 12, when the R/W transmits a query command ALL which can be recognized by plural RFIDs with different communication methods, RFID (A) and RFID (C) respond. Since RFID (B) is not present, response thereof is not issued. As a response timing, the timings of respective communication methods are uniquely defined in advance to the query command ALL fed by the R/W as shown in FIG. 13.

For example, RFID (A) is caused to respond within a time period from 0 to t1 after receiving a query command ALL. RFID (B) is caused to respond within a time period from t1 to t2 after receiving the query command ALL. RFID (C) is caused to respond within a time period from t2 to t3 after receiving the query command ALL. With such a definition, since response timings corresponding to respective different communication methods do not collide against one another, the R/W can recognize presence of RFID (A), RFID (B), and RFID (C). Note that, in the case where response timings of respective communication methods are different but plural RFIDs having the same communication method are present, since the plural RFIDs return responses at the same timing, the R/W may receive responses from some of the plural RFIDs normally, or it cannot receive the response normally but may detect a reception level, thereby recognizing the presence of RFID with the communication method. The example shown in FIG. 12 and FIG. 13 describes the case of three types of communication methods but the present invention can be applied to the cases of 1 to N types of communication methods.

Thereafter, as shown in FIG. 12, the R/W recognizes presence of RFID (A) and RFID (C) which have responded to the query command ALL, and it can subsequently read the individual RFIDs one by one. By recognizing different communication methods included in a plurality of RFID tags by one query command ALL in this manner, further reduction in communication time can be achieved.

In the foregoing, the invention made by the inventors of the present invention has been concretely described based on the embodiments. However, it is needless to say that the present invention is not limited to the foregoing embodiments and various modifications and alterations can be made within the scope of the present invention.

The RFID system according to the present invention is a technology especially effective when applied to an RFID system including plural types of RFID tags having different communication methods.

## Claims

1. An RFID system comprising:
singular or plural first RFID tags corresponding to a first communication method;
singular or plural second RFID tags corresponding to a second communication method; and
an RFID reader/writer which can perform radio communication with said singular or plural first RFID tags and said singular or plural second RFID tags,
wherein said RFID system is provided with a first function to cause said singular or plural first RFID tags to respond to said RFID reader/writer at a time and cause said singular or plural second RFID tags to respond to said RFID reader/writer at a time.

2. The RFID system according to claim 1,
wherein said first function is realized by providing, to said RFID reader/writer, a first command which causes said singular or plural first RFID tags to respond at a time and a second command which causes said singular or plural second RFID tags to respond at a time.

3. The RFID system according to claim 1,
wherein said first function is realized by steps of:
providing a first timing to said singular or plural first RFID tags,
providing a second timing later than said first timing to said singular or plural second RFID tags, and
providing, to said RFID reader/writer, a third command which causes said singular or plural first RFID tags to respond at said first timing at a time and subsequently causes said singular or plural second RFID tags to respond at said second timing at a time.

4. The RFID system according to claim 1,
wherein said RFID reader/writer recognizes presence of the first RFID tags corresponding to said first communication method by detecting whether responses from said singular or plural first RFID tags are received or detecting magnitude of a reception level, when said reader/writer causes said singular or plural first RFID tags to respond.

5. An RFID tag which responds to a command transmitted from an RFID reader/writer to return a response to said RFID reader/writer,
wherein said RFID tag has a fixed response timing uniquely defined based upon its own communication method as a timing for transmitting a return in response to said command.

6. An RFID reader/writer which can perform radio communication with singular or plural first RFID tags corresponding to a first communication method and singular or plural second RFID tags corresponding to a second communication method,
wherein said RFID reader/writer has a command which causes said singular or plural first RFID tags to respond at a time and causes said singular or plural second RFID tags to respond at a time.

7. The RFID reader/writer according to claim 6,
wherein said command includes:
a first command which causes said singular or plural first RFID tags to respond at a time; and
a second command which causes said singular or plural second RFID tags to respond at a time.

8. The RFID reader/writer according to claim 6,
wherein said command is a third command which causes said singular or plural first RFID tags to respond at a time at a first timing and subsequently causes said singular or plural second RFID tags to respond at a time at a second timing later than said first timing.

9. A method for processing an RFID system, which comprises:
singular or plural first RFID tags corresponding to a first communication method; singular or plural second RFID tags corresponding to a second communication method; and an RFID reader/writer which can perform radio communication with said singular or plural first RFID tags and said singular or plural second RFID tags, said method comprising:
a first step of transmitting a first command from said RFID reader/writer to said singular or plural first RFID tags and said singular or plural second RFID tags;
a second step in which said singular or plural first RFID tags return first responses to said RFID reader/writer at a time;
a third step in which said RFID reader/writer detects whether said first responses are received or detects magnitude of a reception level;
a fourth step of transmitting a second command from said RFID reader/writer to said singular or plural first RFID tags and said singular or plural second RFID tags;
a fifth step in which said singular or plural second RFID tags return second responses to said RFID reader/writer at a time; and
a sixth step in which said RFID reader/writer detects whether said second responses are received or detects magnitude of a reception level.

10. The method for processing an RFID system according to claim 9,
wherein, after said first step to said sixth step, said method further comprising:
a step of performing individual recognition of said singular or plural first RFID tags or performing no individual recognition of said singular or plural first RFID tags; and
a step of performing individual recognition of said singular or plural second RFID tags or performing no individual recognition of said singular or plural second RFID tags.

11. A method for processing an RFID system, which comprises:
singular or plural first RFID tags corresponding to a first communication method; singular or plural second RFID tags corresponding to a second communication method; and an RFID reader/writer which can perform radio communication with said singular or plural first RFID tags and said singular or plural second RFID tags, said method comprising:
a first step of transmitting a third command from said RFID reader/writer to said singular or plural first RFID tags and said singular or plural second RFID tags;
a second step in which said singular or plural first RFID tags return first responses to said RFID reader/writer at a time at a first timing;
a third step in which said RFID reader/writer detects whether said first responses are received or detects magnitude of a reception level;
a fourth step in which said singular or plural second RFID tags return second responses to said RFID reader/writer at a time at a second timing later than said first timing; and
a fifth step in which said RFID reader/writer detects whether said second responses are received or detects magnitude of a reception level.
